**Europäisches Patentamt**

**European Patent Office**

**Office européen des brevets**

(11) Publication number: **0 108 819**
**B1**

(12) **EUROPEAN PATENT SPECIFICATION**

(45) Date of publication of patent specification: **25.11.87**

(51) Int. Cl.⁴: **C 23 G 5/00, C 03 C 23/00**

(21) Application number: **82110370.2**

(22) Date of filing: **10.11.82**

(54) Process for the removal of carbon and/or carbon compounds from solid surfaces.

(43) Date of publication of application:
**23.05.84 Bulletin 84/21**

(45) Publication of the grant of the patent:
**25.11.87 Bulletin 87/48**

(84) Designated Contracting States:
**AT BE DE FR GB IT NL SE**

(56) References cited:
**FR-A- 996 475**
**FR-A-1 357 992**
**FR-A-2 396 089**
**US-A-2 228 026**
**US-A-3 615 816**

**CHEMICAL ABSTRACTS, vol. 79, no. 24, 17th December 1973, page 116, no. 139041p, Columbus, Ohio, USA**

(73) Proprietor: **THE DOW CHEMICAL COMPANY**
**2030 Dow Center Abbott Road P.O. Box 1967**
**Midland, MI 48640 (US)**

(72) Inventor: **Settineri, William Joseph**
**692 E. Pine River Road**
**Midland Michigan, 48640 (US)**
Inventor: **Klassen, Harold Edward**
**2251 Poseyville Road**
**Midland Michigan, 48640 (US)**
Inventor: **Tolly, Milton Carl**
**601 E. Baker Road**
**Hope Michigan (US)**

(74) Representative: **Casalonga, Alain et al**
**BUREAU D.A. CASALONGA OFFICE JOSSE & PETIT Morassistrasse 8**
**D-8000 München 5 (DE)**

Courier Press, Leamington Spa, England.

## Description

Due to prior processing, surfaces of solid materials, such as metal or glass, may have thereon a layer of residual carbon in various forms. Such surface carbon can interfere with subsequent treatment of the surface. For example, steel plate or sheet has residual organic compounds on the surfaces thereof which come from lubricants used in rolling the metal. The carbon is particularly difficult to remove after the steel has been annealed. When the steel is later treated, e.g., phosphatized or painted, the residual carbon on the surface of the steel can interfere with effective treatment, thereby increasing the potential for corrosion of the steel in subsequent applications. In the past, acid or alkaline washes have been used in an effort to clean the metal surface and remove residual carbon. However, acid washes are typically time consuming, in addition to being hazardous, and alkaline washes normally are done at elevated temperatures, thus are more energy-intensive.

US Patent 2 228 026 discloses a process for cleaning metal parts of combustion motors essentially parts made of aluminium or alloys of aluminium by treating the parts with oleum containing 30% free $SO_3$, rinsing with sulfuric acid, neutralizing the acid and finally washing with water.

The process according to the present invention is capable of removing thin carbon deposits not only from metals but from any solid surface within extremely short period of time.

The present invention provides for a process of treating metal, glass or other surfaces that have thereon a layer of residual carbon. The present invention is a process for removing a carbon layer from a solid surface having such a layer thereon characterized by contacting the surface with an anhydrous fluid consisting of sulfur trioxide vapour or of a mixture thereof with dry air, nitrogen or a chlorinated solvent or a fluorinated hydrocarbon and thereafter rinsing the surface.

By such treatment, the carbon layer is effectively removed. The carbon is present in the form of various organic compounds or inert, zero valence carbon (amorphous or graphitic). The organic compounds may come from greases or oils left on the surface from prior processing. The inert carbon is generated from decomposition of the organic compounds as a result of heat treatment of the solid surface. On a metal surface, the carbon layer can be incorporated into the irregular surface to a depth of, for example, 5 nm.

The process is practiced under anhydrous conditions.

Contact of the solid surface with the sulfur trioxide-containing fluid should be accomplished under water-free conditions. If the solid surface is wet, the surface should be first dried, for example, by heating to elevated temperature, to remove residual surface moisture. The atmosphere around the contact area between the solid surface and sulfur trioxide-containing fluid should be anhydrous. For example, if the contact is to be made in a container, the atmosphere within the container should be purged to remove water vapour prior to contact of the sulfur trioxide-containing fluid with the solid surface.

The contact time utilized in the method of the present invention is dependent upon the desired amount of carbon layer to be removed and the concentration of the sulfur trioxide in the fluid.

In general, the higher the concentration of the sulfur trioxide, the shorter amount of time required to remove a given amount of surface carbon.

Experiments indicate that most of the carbon is removed by the process with only a few seconds of contact.

After the surface has been contacted with the sulfur trioxide, it is flushed, swept or otherwise rinsed with a fluid (gas or liquid). Preferably, the rinse fluid is a water-based liquid. The rinsing step can also be the first step in post-treatment processing of the surface.

If the solid to be cleaned is steel or steel alloy, it has been observed that the metal surface after contact with the sulfur trioxide-containing fluid is highly activated, for example, as shown by rapid formation of red rust on steel surfaces. Therefore, preferably in the method of the present invention, the steel surface treated with sulfur trioxide-containing fluid should be subsequently contacted with a passivating solution. A passivating solution is one which prevents or otherwise inhibits oxidation of the metal surface, thus stabilizing the surface. The passivating solution can, for example, be made up of any known metal surface complexing agents, e.g., chelating agents such as ethylene-diaminetetraacetic acid or hydroxyethylimidodiacetate, nitrites, nitrates and chromates, which effectively passivate the treated surface. The passivating solution can also serve as the fluid in the rinsing step. Preferably, a water wash is employed immediately after the contact with the passivating solution.

Although preferred for most applications, passivating the steel surface is not required to obtain utility of the present invention. It is desirable, for example, in phosphatizing steel to have a clean, chemically homogeneous, active surface on which to carry out the phosphating. The method of the present invention provides such a steel surface.

The present method is applicable to a variety of solid surfaces which have a residual carbon layer which is desired to be removed, including metals, and ceramics such as glass. The present method provides a rapid, inexpensive, simple procedure for effective removal of residual surface carbon. The process can be carried out in a batch operation or preferably in a continuous line operation where the solid surface is passed through a zone of sulfur trioxide-containing fluid.

Examples

The examples described herein unless otherwise specified were conducted utilizing the following

2

equipment. To provide a sulfur trioxide gas for contact with the solid surface, a sulfur trioxide vaporizer in a steam-heated bath was employed. Such vaporizer was connected to a four-liter stainless steel/glass treatment chamber into which samples of solids were placed to be treated. By heating the sulfur trioxide vaporizer and opening connecting lines into the four-liter chamber $SO_3$ vapors were transferred into the treatment chamber. Passivating solutions or water rinses were fed directly into the treatment chamber.

In all the examples, surface carbon was measured by Auger electron spectroscopy, a spectroscopic method well-known in the art. A summary can be found in the publication "Methods and Phenomena, Methods of Surface Analysis", Vol. 1, Chapter 15, Elsevier Scientific Publishing Company (1975). In addition, it was observed on all metal samples which were treated in accordance with the present invention that the surfaces of such treated metal samples were easily wet with water. A drop of water on such surface would quickly form a film, a characteristic of a substantially clean metal surface.

Examples 1—5

Aluminum foil samples were placed in the treatment chamber and, after a nitrogen flush, about 5.4 g of $SO_3$ was vaporized into the chamber. After specified contact time, water was quickly flowed into the chamber to dissolve the $SO_3$ and rinse the coupons. Results of multiple Auger spectroscopy determinations are given in Table I.

TABLE I

Auger surface analysis (Weight % Carbon) for $SO_3$ treated Al samples

| Example | Contact (seconds) | Average weight % carbon (3 determinations) |
|---|---|---|
| Comparative A | 0 | 73 |
| 1 | 30 | 4 |
| 2 | 60 | 5 |
| 3 | 120 | 5 |
| 4 | 180 | 8 |
| 5 | 240 | 5 |

These examples demonstrate the effective removal of surface carbon by the present method.

Example 6

Cold rolled steel panels were allowed to equilibrate to 60°C in the treatment chamber. After nitrogen flushing of the chamber and evacuation, 2 ml of liquid $SO_3$ was vaporized into the chamber. The $SO_3$ was held in contact with the warm coupons for 20 minutes before flushing out the $SO_3$ vapors with nitrogen and rinsing the coupons with deionized water. These were dried and submitted for Auger spectroscopy. An untreated control panel was also examined for comparison with the treated sample. Review of the resulting Auger depth profiles indicated a reduction in surface carbon from about 25 weight percent to less than 2 weight percent.

Examples 7—9

Mild steel coupons (2.5 cm×7 cm×3 mm thick) were toluene-washed, rinsed in acetone, and pickled in 10 percent HCl for 10 minutes. These were dried and suspended in the treatment chamber. The chamber was nitrogen-flushed and 10.8 g of $SO_3$ vaporized into the four-liter volume. Contact time with the $SO_3$ vapors was 10 minutes before the $SO_3$ was blown out with a nitrogen stream. Three coupons were treated in each sulfonation and each batch of three coupons was placed directly into different rinses.

The three rinses were (Example 7) deionized water, (Example 8) 0.01 N NaOH, and (Example 9) a 5 percent solution of hydroxyethylimidodiacetate (HEIDA). Coupons were stirred in the rinse solution for 10 minutes.

In the case of the deionized water rinse, the coupon surface began to discolor while still in the rinse. It turned black and when out of the rinse began to form red rust.

No initial coupon discoloration was observed in the 0.01 N NaOH and 5 percent HEIDA solutions. All coupons were removed from their rinse solutions and given a 5-minute, fresh deionized water rinse and hung up to air dry. The coupons rinsed in the 0.01 N NaOH rusted only slightly while the three coupons from the HEIDA bath remained clean, rust-free and shiny.

Auger spectroscopy measurements were made on the mild steel coupons following the rinsing step. The results are given in Table II.

# 0 108 819

## TABLE II
Auger spectroscopy measurements for $SO_3$-cleaned and rinsed coupons

| Example No. | Coupon treatment | Weight % carbon |
|---|---|---|
| 7 | Deionized water rinse for 10 minutes after $SO_3$ | 1.1 |
| 8 | 0.01 N NaOH rinse for 10 minutes after $SO_3$ | 2.3 |
| 9 | 5 percent HEIDA rinse for 10 minutes after $SO_3$ | 3.6 |
| Comparative B | No treatment | 29.0 |

Examples 10—14

$SO_3$ treatment of steel sheet metal samples (3"×4") (7.6 cm×10.2 cm) was done in the treatment chamber. Samples to be treated were hung in the sealed off volume of the chamber, the chamber evacuated to a pressure of 266—400 Pascals about 4 g of $SO_3$ vaporized into the vacuum and held in contact with the coupons for 5 minutes, and finally a rinse applied directly into the container still containing the steel and residual $SO_3$ vapor. The rinse obtained a chelant in varying amounts. Enough NaOH was added to the rinse in each case to neutralize the sulfuric acid formed when the rinse mixed with residual $SO_3$. After a 1-minute contact with this rinse, the coupons were removed, rinsed in deionized water and air dried.

The results of the Auger spectroscopy analysis of the cleaned surfaces together with other experimental observations are presented in Table III.

## TABLE III

| Example No. | Rinse description | Sample observations | Surface weight % of carbon by auger analysis |
|---|---|---|---|
| Comparative C** | No $SO_3$ or rinse | — | 40—60 |
| 10A* | Deionized (DI) water rinse—no chelant | Immediate red rusting (fine and uniform) on air drying after rinse | 14 |
| 10B** | | | 15 |
| 11A | 1% HEIDA*** in DI water | Still red rust, not as heavy as above | 18 |
| 11B | | | 30 |
| 12A | 1% HEIDA plus 2 grams of NaOH in 4 liters of DI water | Good looking coupon surface, very little red rest forming on drying away final rinse | 18 |
| 12B | | | 19 |
| 13A | Rinse as above but increased HEIDA to 3% level | Same as above— especially chrome— chrome oxide panels look best | 20 |
| 13B | | | 25 |
| 14A | 5% HEIDA in water, no caustic | Quite a bit of dark streaking but no observation of red rust on drying | 22 |
| 14B | | | 16 |

* A-Cold rolled steel sheet
** B-Chrome—Chrome oxide coated steel sheet

***HEIDA is

$$HO-CH_2CH_2-N \begin{cases} CH_2COO^-Na^+ \\ CH_2COO^-Na^+ \end{cases}$$

Example 15

Small sections (3″×1″×1/32″) (7.6 cm×2.54 cm×0.08 cm) of sheet steel exemplary of autobody steel were cut and placed in a two-liter glass vessel. This chamber was flushed with nitrogen and evacuated at 60°C. Liquid $SO_3$ (2 ml) was injected into the chamber. Steel samples and $SO_3$ were held in contact for 20 minutes before flushing $SO_3$ vapor from treatment chamber and rinsing with deionized water. Steel samples were further rinsed in fresh deionized water and nitrogen-dried. Auger analysis is presented in Table IV.

TABLE IV
Steel sheet—$SO_3$ vapor-cleaned—
surface concentration of carbon

| Example No. | Carbon (wt.%) |
|---|---|
| Comparative D | 44 |
| 15 | 2 |

Examples 16—20

One-inch square (6.45 cm²) coupons were cut from mild steel sheet typical of automobile steel. A glass bottle treatment chamber was employed which would be instantly flushed with a large volume of nitrogen. A rubber top held on by pressure (vacuum to atmosphere) could also be instantly removed. With such nitrogen flushing and quick top removal, the $SO_3$-steel contact time could be reduced to as low as 10 seconds. All treatments were done after sample and treatment chamber had equilibrated to 60°C. Liquid $SO_3$ was injected directly into the treatment chamber and allowed to vaporize from the warm base of the chamber. Heat was supplied by a heated plate directly under and touching the chamber surface. The samples were removed from the chamber and rinsed with deionized water.

Table V shows that samples treated for periods of 10 seconds to 20 minutes experienced similar levels of carbon removal. These data indicate a relatively brief $SO_3$ exposure is effective in removing the surface carbon.

TABLE V
Auger electron spectroscopy surface carbon on sheet steel

| Example No. | Treatment | Surface Wt. % carbon |
|---|---|---|
| 16 | 20 min. in $SO_3$ | 12.0 |
| 17 | 10 min. in $SO_3$ | 10.0 |
| 18 | 1 min. in $SO_3$ | 6.4 |
| 19 | 30 sec. in $SO_3$ | 11.0 |
| 20 | 10 sec. in $SO_3$ | 13.0 |
| Comparative D | No treatment | 44.0 |

Example 21

Black plate steel samples (8″×3 3/8″×.006″) (20.3 cm×8.59 cm×0.15 mm) were treated by placing them in a 3.5-liter chamber, drying the chamber with a nitrogen flush, evacuating the chamber and injecting 4 ml of liquid $SO_3$ into the chamber held at 45°C. Contact time was 5 minutes followed by a deionized water rinse. Weight percent surface carbon was reduced from 85 percent to 5 percent as measured by Auger spectroscopy.

Examples 22—23

Black plate steel samples (1″×3 3/8″×.006″) (2.54 cm×8.59 cm×0.15 mm) were treated two at a time in a 3.5-liter chamber (steam heated) which was dried and evacuated for each treatment. Samples under vacuum were allowed to equilibrate in the chamber at 50°C before injecting 4 ml (7.2 g) of liquid $SO_3$ directly into the chamber. At contact times of 10 seconds and 1 minute, a nitrogen flush was used to remove and dilute $SO_3$ vapors. Samples were rinsed in deionized water and dried before Auger analysis. The analysis is given in Table VI (average of 6 samples for Examples 22—23 and average of 2 samples for the Comparative).

# 0 108 819

## TABLE VI
### Carbon weight % for $SO_3$-treated black plate steel

| Example No. | Carbon (wt. %) |
| --- | --- |
| Comparative E | 65.0 |
| 22 (10-second treatment) | 10.0 |
| 23 (1-minute treatment) | 8.5 |

**Example 24**

Glass samples about 1/4-inch square ($0.41\ cm^2$) were contacted with sulfur trioxide by injecting 2 ml of $SO_3$ liquid into a glass flask containing the samples. After 10 minutes of contact with vaporized $SO_3$, the flask was flushed with nitrogen, the glass samples rinsed with water and air dried. Surface carbon was analyzed by Auger spectroscopy.

Weight percent C on the surface of the treated glass samples was 10 percent. Weight percent C on the surface of untreated glass samples was 40 percent.

**Examples 25—27**

In these examples, the sulfur trioxide was dissolved in a chlorinated solvent. Samples of cold rolled steel sheet were subjected to the treatments described in Table VII and the measured for surface carbon. The data demonstrate the improved carbon removal accomplished by the method of the present invention.

## TABLE VII
### $SO_3$ in chlorinated solvent—cold rolled steel

| Example No. | Treatment | Weight % carbon |
| --- | --- | --- |
| Comparative F | None | 97 |
| Comparative G | Dipped and swirled in distilled methylene chloride for 2 minutes at room temperature. | 50 |
| 25 | Dipped and swirled in solution of 10 weight % $SO_3$ in distilled methylene chloride for 2 minutes at room temperature. Samples were rinsed with deionized water. | 42 |
| 26 | Dipped and swirled in solution of 10 weight % $SO_3$ in 1,1,2,2-perchloroethylene for 2 minutes at room temperature. Samples were rinsed with deionized water. | 25 |
| 27 | Contacted with $SO_3$ gas for 2 minutes. Samples were rinsed with deionized water. | 15 |

**Claims**

1. A process for removing a carbon layer from a solid surface having such layer thereon, characterized by contacting the surface with an anhydrous fluid consisting of sulfur trioxide vapour or of a mixture thereof with dry air, nitrogen or a chlorinated solvent or a fluorinated hydrocarbon and thereafter rinsing the surface.

2. The process of claim 1 wherein the rinsing step is accomplished by contacting the surface with a passivating solution containing a chelating agent.

6

**0 108 819**

3. The process of claim 1 including the additional step of contacting the so-treated surface with a passivating solution containing a chelating agent.

4. The process of claims 1 to 3 wherein the surface is ceramic.

**Patentansprüche**

1. Verfahren zum Entfernen einer Kohlenstoffschicht von einer eine solche Schicht aufweisenden festen Oberfläche, gekennzeichnet, durch in Berührung Bringen der Oberfläche mit einem wasserfreien, fluiden Medium bestehend aus Schwefeltrioxiddampf oder einer Mischung desselben mit trockener Luft, Stickstoff oder einem chlorierten Lösungsmittel oder einem fluorierten Kohlenwasserstoff und anschließendes Waschen der Oberfläche.

2. Verfahren nach Anspruch 1, dadurch gekennzeichnet, daß der Waschschritt durch in Berührung Bringen der Oberfläche mit einer ein komplexbildendes Mittel enthaltenden passivierenden Lösung erfolgt.

3. Verfahren nach Anspruch 1, dadurch gekennzeichnet, daß als zusätzlicher Schritt die so behandelte Oberfläche mit einer ein komplexbildendes Mittel enthaltenden passivierenden Lösung in Berührung gebracht wird.

4. Verfahren nach Ansprüchen 1 bis 3, dadurch gekennzeichnet, daß die Oberfläche keramisch ist.

**Revendications**

1. Procédé pour enlever une couche de carbone d'une surface solide présentant une telle couche sur elle, caractérisé par le fait que l'on met en contact la surface avec un fluide anhydre, constitué de vapeur de trioxyde de soufre ou d'un mélange de celle-ci avec de l'air sec, de l'azote, ou un solvant chloré ou un hydrocarbure fluoré, et le rinçage ultérieur de la surface.

2. Procédé conformé à la revendication 1, dans lequel l'étape de rinçage est effectué par mise en contact de la surface avec une solution passivante contenant un agent chélatant.

3. Procédé conforme à la revendication 1, comprenant l'étape supplémentaire de mise en contact de la surface ainsi traitée avec une solution passivante contenant un agent chélatant.

4. Procédé conforme aux revendications 1 à 3, dans lequel la surface est en céramique.

7